Europäisches Patentamt

(19) European Patent Office

Office européen des brevets

(11) **EP 0 947 377 A2**

(12) **EUROPEAN PATENT APPLICATION**

(43) Date of publication:
06.10.1999 Bulletin 1999/40

(51) Int. Cl.$^6$: **B60L 11/18**

(21) Application number: 99201015.7

(22) Date of filing: 02.04.1999

(84) Designated Contracting States:
**AT BE CH CY DE DK ES FI FR GB GR IE IT LI LU MC NL PT SE**
Designated Extension States:
**AL LT LV MK RO SI**

(30) Priority: **03.04.1998 IT MI980726**

(71) Applicant:
**ABB Daimler-Benz Transportation (Italia) S.p.A.**
**20137 Milano (IT)**

(72) Inventors:
 • **Sezenna, Franco**
 **20139 Milano (IT)**
 • **Oberti, Maurizio**
 **16100 Genova (IT)**

(74) Representative:
**Pezzoli, Ennio et al**
**Jacobacci & Perani S.p.A.**
**Via Visconti di Modrone 7**
**20122 Milano (IT)**

(54) **A control system and a respective control method for supplying an asynchronous motor**

(57)    In a control system for a double-star asynchronous motor supplied by inverters with square-wave impressed voltage pulses which generate a rotating field vector, the voltage impressed on the various phases is switched, for each phase, when the field vector adopts predetermined angular directions, and also when the field vector is in advance of and delayed relative to the said angular directions by a predetermined electrical angle of the order of 5-7.5 electrical degrees.

FIG.4

## Description

The present invention relates to a control system and to a respective control method for supplying induction or asynchronous motors having multiple three-phase and, more generally, multi-phase windings.

More particularly, the invention relates to a control system which uses direct vectorial control techniques for regulating the stator-flux vector, guiding it along paths close to a circular path by optimized driving of the power semiconductors belonging to a drive system constituted by two or more impressed-voltage inverters which supply the phases of a three-phase asynchronous motor having two or more sets of three windings.

The pulsation of the electromagnetic torque at the air-gap, as well as the harmonic content of the current absorbed are thus substantially reduced.

The invention may be used in drive systems of all types which are used, in particular, in traction, and in the industrial, naval and military fields, in which the use of induction motors is preferable to that of direct motors because of their good reliability and ease of maintenance.

However, in order to vary the speed of induction motors and to set suitable working conditions thereof, it is necessary to supply the motors with alternating voltages/currents of variable amplitude and frequency which are supplied by static power converters or inverters.

Theoretically, these inverters should supply strictly sinusoidal alternating voltages/currents, but this can be achieved only by complex and expensive technological solutions of limited efficiency.

For example, it is known that sinusoidal supply-voltage waveforms can be obtained by the selective connection of several voltage generators in series in a manner variable over time.

The stepped voltage obtained approximates to a sinusoidal waveform, to a certain extent.

Alternatively, it is possible to make use of the reactive characteristics of the load constituted by the motor in order to apply thereto, by means of an inverter, short voltage pulses of constant amplitude and modulated duration or width, the integral of which over time has a sinusoidal form with the desired amplitude and frequency.

This PWM or pulse-width modulation technique for simultaneously controlling the amplitude and the waveform of the apparent supply voltage causes considerable switching losses and limits the range of variability of the operative conditions.

However, as an alternative, simpler, more reliable and more efficient solution, drive systems have been developed which are constituted by two or more impressed-voltage inverters each of which supplies, to the phases of a three-phase asynchronous motor having a plurality (two or more) of sets of three separate windings, rectangular pulses of constant amplitude (these are actually trains of pulses the duty-cycle of which is modulated in order to achieve a mean supply-voltage amplitude which is variable according to the desired working conditions).

In particular, if the asynchronous motor has two sets of three separate windings connected in a star arrangement, the motor is called a "double star" motor.

When the two stars constituting the two sets of windings have homologous windings (for example, phases R and R') spatially offset by an angle of 30 electrical degrees ($\pi/6$), the supply of the homologous phases with square-wave voltage pulses produced by an inverter (a six-step inverter) and also offset by 30 electrical degrees achieves:

- a significant reduction in the harmonic content of the current absorbed by the inverter on the direct side;
  the 6th harmonic is in fact cancelled out;
- a significant reduction in the amplitude of the torque pulsation at the air-gap which is superimposed on the direct value generated and corresponds to the alternating-current harmonics.

However, this method involves a significant increase in the harmonics of the current flowing in the phases of the motor, with particular reference to the lower harmonics such as the 5th and the 7th, which cause additional heating of the windings of the motor without any contribution to the energy exchange at the air-gap and are inevitably associated with torque pulsation and noise.

To reduce the presence of these harmonics, it has been proposed to interpose between the inverter and the motor a suitable coupling transformer which can eliminate a predetermined number of harmonic components of the voltage output by the converters.

It has also been proposed to modify the windings of the stator assembly of the asynchronous motor so as to increase the leakage inductance and thus to limit the amplitude of the 5th- order and 7th-order, as well higher-order, harmonics.

The solutions proposed, which are essentially dissipative, are inadequate for the current requirements, are expensive, and do not improve the energy-conversion performance of the drive system.

These limitations are avoided by the control system and the respective control method for supplying an asynchronous motor with multiple windings, in particular a double-star motor, which are the subjects of the present invention as defined by the appended claims.

Briefly, the control system is based on the known principle of field control and orientation and comprises a plurality of inverters, one for each three-phase winding, each for supplying the phases of one winding with impressed-voltage pulses, means associated with each winding for recognizing the amplitude and the orientation of a rotating-field (or stator-flux) vector $\psi$ generated by the voltage pulses applied to the phases of the associated winding, and means for switching the impressed voltage to each of the phases at moments at which the rotating-field vector specific to each phase adopts predetermined angular directions, the switchings relating to the same phase being spaced angularly by an electrical angle $\pi$, and the switchings of the various phases being spaced relative to one another by predetermined electrical angles ($\pi/3$ or $2\pi/3$ in the case of three-phase windings).

In addition to these means known *per se*, the control system comprises, as an innovative characteristic, means for advancing the switching of the impressed voltage to each of the phases to moments at which the field vector $\psi$ is spaced angularly in advance of the predetermined angular directions specific to each phase by a first predetermined angle, for switching the impressed voltage to each of the phases again at the moments at which the field vector adopts the predetermined directions specific to each phase, and for further switching the impressed voltage to each of the phases at moments at which the field vector is angularly delayed relative to the predetermined directions specific to each phase by a second predetermined angle which, advantageously, is equal to the first, in the case of double-star asynchronous motors with stars offset angularly by 30 electrical degrees.

The path of the field vector which, as is known, for a multi-phase winding supplied with rectangular impressed-voltage pulses, is a regular polygon and, in particular, in the case of a three-phase winding, a hexagon, thus becomes a polygon which copies the original polygon, except at the vertices which are bent inwardly.

Since the total field vector is the vectorial sum of the fields generated by the various windings, advantageously in phase with one another, the fluctuations in amplitude of the various fields compensate one another to a large extent, with a substantial attenuation or suppression of the low-order harmonics.

The characteristics and the advantages of the invention will become clearer from the following description of a preferred embodiment and from the appended drawings, in which:

Figure 1 is a block diagram showing an impressed-voltage inverter drive system for supplying a double-star, three-phase motor,
Figure 2 is a time graph of the square-wave voltages output by the inverters of Figure 1,
Figure 3 is a diagram showing the trace described by the end of the rotating magnetic-flux or field vector generated by each winding individually, with the square-wave supply of Figure 2,
Figure 4 is a diagram showing the trace described by the end of the rotating field vector generated individually by each winding supplied in accordance with the present invention,

Figure 5 is a time graph showing the voltages output by the inverters of Figure 1 in order to supply the windings in accordance with the present invention,
Figure 6 is a block diagram of a preferred embodiment of the drive system with direct self-control for a double-star asynchronous motor according to the present invention,
Figure 7 is a more detailed block diagram of a comparison and phase-control generating block of the drive system of Figure 6.

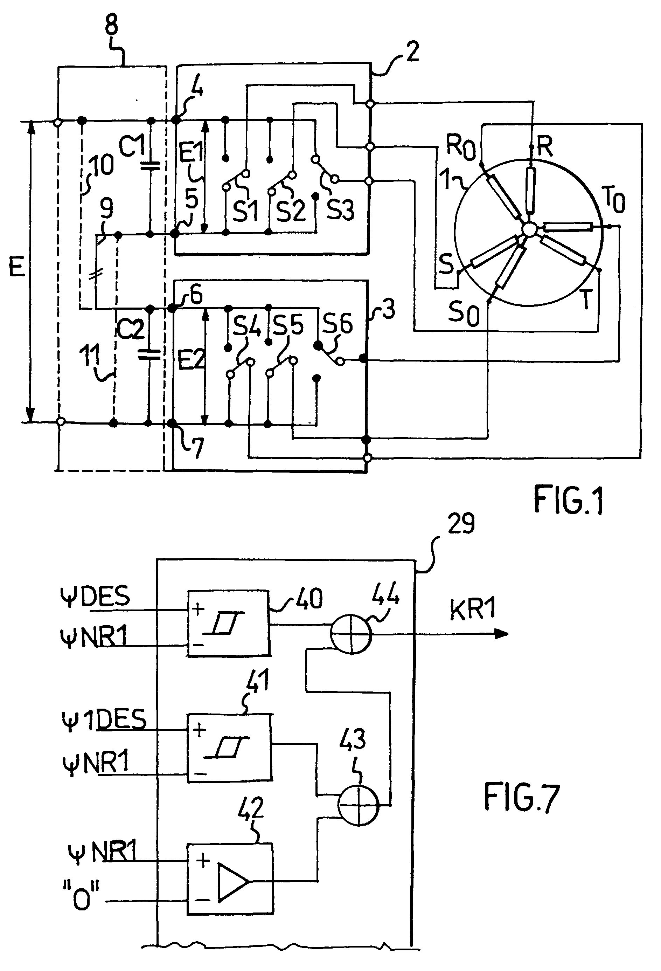

For a better understanding of the invention, Figure 1 shows schematically the known aspects of a drive system for a double- star motor 1 with two impressed-voltage inverters 2, 3.

The motor 1 has two stator windings, each constituted by three phases, R, S, T and R0, S0, T0, respectively. The two windings are angularly offset by an angle of 30 electrical degrees, and the phases of each winding are uniformly spaced angularly by 120 electrical degrees.

The inverter 2, which is supplied by a direct voltage E1, comprises three switches S1, S2, S3 which connect the phases RST, respectively, to one or other of the electrical input terminals 4, 5 having positive or negative electrical potential, respectively.

Similarly, the inverter 3, which is supplied by a direct voltage E2, advantageously equal to E1, comprises three switches S4, S5, S6 which connect the phases R0, S0, T0 of the second winding, respectively, to one or other of the electrical input terminals 6, 7 of the inverter having positive or negative electrical potential, respectively.

The supply voltage to the inverters is provided by an intermediate circuit 8 constituted basically by two capacitors C1, C2 connected between the terminals 4,5 and 6,7, respectively.

The capacitors C1, C2 may in turn be connected in series, as shown by the continuous line 9, relative to an input supply voltage E ( E=E1+E2 ) or in parallel, as shown by the broken lines 10, 11 and by the clear break in the line 9.

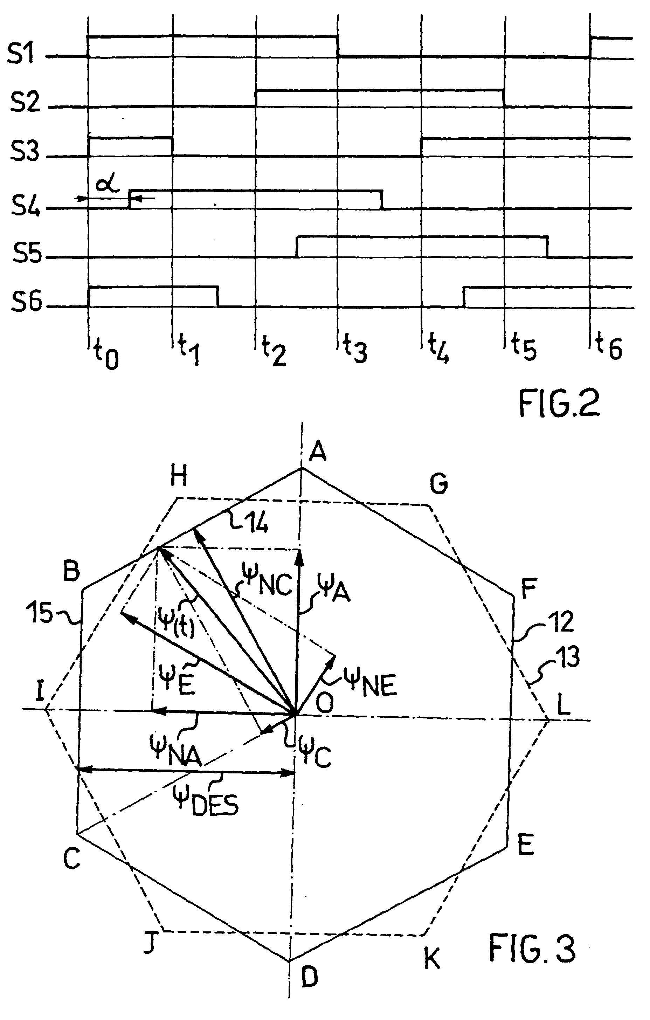

Figure 2 is a time graph showing the sequence of excitation of the various phases by means of square-wave impressed-voltage pulses applied in conventional manner and having the same period, with a relative phase-difference of 120° between the pulses applied to the phases of the same winding and a relative phase difference $\alpha$ between the pulses applied to the phases of the two windings, which is equal to the angular offset of the two windings, that is, in the most common case, 30 electrical degrees. The excitation states of the various phases are identified by the switched states of the various inverter switches S1, S2, S2, S4, S5, S6 to +/-, respectively.

In these supply conditions, the two windings generate two rotating magnetic fields which are exactly in phase with one another and each of which can be represented by a rotating magnetic-flux or field vector $\psi(t)$ the direction and amplitude of which are variable as a function of time and the trace of the end of which is a regular hexagon.

Figure 3 shows the rotating flux vector $\psi(t)$ at a generic moment, the hexagon 12 represents the trace of the flux vector generated by the winding formed by the phases RST and the hexagon 13 shown in broken outline represents the trace of the flux vector generated by the winding formed by the phases R0, S0, T0.

In particular, a correlation can be established between the excitation states represented in the graph of Figure 2 and the orientation of the flux vector of the polar diagram of Figure 3; when, at the initial time t0 of Figure 2, the switch S1 is switched to the positive voltage, the end of the flux vector $\psi(t)$ starts to move from the vertex A of the hexagon 12 along the side 14 towards the vertex B which it reaches at the time t1.

At the time t1, the phase T is connected to the negative potential by the switching of S3 and the end of the flux vector starts to move from the vertex B along the side 15 towards the vertex C, and so on.

Similar remarks apply to the flux vector resulting from the excitation of the second winding.

The direction in which the end of the flux vector due to each of the windings moves is determined univocally by the excitation states of the phases and the change takes place from one direction, for example, that defined by the side 14, to the next as a result of the switching of the supply to a single one of the phases.

The flux vector $\psi(t)$ in the example of Figure 3 rotates anticlockwise with an order of switching of the phases equal to RST. Rotation in the opposite direction can be achieved, as is well known, simply by changing the order of switching of two of the phases relative to the third (that is, RTS).

It can readily be seen that the flux as a whole, which is the sum of the two fluxes, has pulsations of an amplitude relatively lower than that of the fluxes generated by the two windings individually.

In particular, the 6th harmonic of the fluxes generated by the two windings individually is entirely cancelled out, that is, at the frequency of the 6th harmonic, the flux pulsations of the two windings are mutually compensating.

Nevertheless, the odd harmonics such as the 5th and the 7th and, of the even ones, the 12th harmonic, are still present to a significant extent.

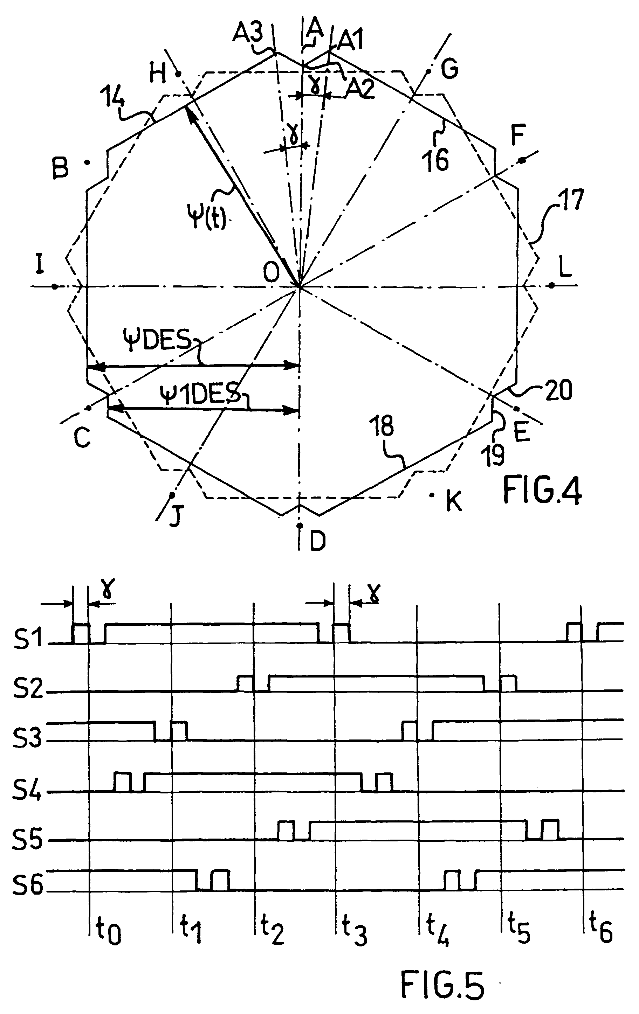

A substantial reduction in these harmonics is achieved, according to the present invention, by modifying the way in which the phases are excited in a manner such that the path of the flux vector $\psi(t)$ generated by each of the two windings only partially follows or copies the hexagonal trace of Figure 3 and, at the vertices of the hexagon, has a wedge-like bend extending towards the interior of the hexagon, with sides parallel to those which define the vertex of the hexagon, as shown by the polar diagram of Figure 4.

In particular, as the flux vector $\psi(t)$ rotates anticlockwise, it is forced by the switching of the supply of one phase (in particular, the phase S controlled by S2), suitably in advance of the vertex A of the hexagon when the angular position identified by the point A1 is reached, to follow the trace A1- A2, parallel to the side 14 of the hexagon, where A2 is a point angularly aligned with the angle A.

Once the angular direction identified by A2 has been reached, the supply of the phase just switched is switched again and the end of the flux factor $\psi(t)$ moves along the trace A2-A3 parallel to the side 16 of the hexagon, A3 being the point of intersection of the trace A2-A3 with the side 14 of the hexagon.

Once the angular direction identified by A3 has been reached, the supply of the phase just switched is switched for a third time and the end of the flux vector $\psi(t)$ moves along the side 14 of the hexagon.

Basically, a simple switching of one phase when the flux vector reaches the direction identified by A is supplemented by two switchings of the supply of the same phase, performed with a suitable angular advance and delay, respectively.

The same excitation method is followed for the other phases and again for the same one each time the flux vector approaches one of the vertices of the hexagon.

Naturally, the same excitation method is followed for the second winding so that the flux vector generated by the second winding follows the trace represented by the polygon 17 shown in broken outline.

The fluctuations in amplitude of the two flux vectors are thus compensated to a large extent with a limited residual amplitude "ripple" of relative high frequency.

The optimal advance and delay angle $\gamma$ which defines the positions of the points such as A1 and A3 can be defined from the Fourier series development of the function which describes the sum of the two flux vectors.

This angle is of the order of 5-6 electrical degrees and corresponds to positions of the points such as A2 which are slightly outside the polygonal trace described by the field vector generated by the other winding.

However, a substantial reduction in the harmonic content of the total flux also occurs for $\gamma=7.5$ electrical degrees, for which condition the points such as A2 belong to the polygonal trace of the field vector generated by the other winding.

The method of excitation of the various phases in accordance with the criteria set out is represented graphically by the space-time graphs of Figure 5 which, after the statements made above, require no explanation.

Clearly, any field-orientation control system can apply the method described for reducing the harmonics of the flux and consequently of the stator current.

However, owing to the intrinsic advantages offered in terms of response time, structural simplicity and the ability to modify the working conditions of the motor (speed of rotation and torque) without dangerous transitory states, the method described is implemented with the use of direct self-control techniques and systems such as those described in US patent A-4,678,248, to which reference should be made for a detailed explanation of these techniques.

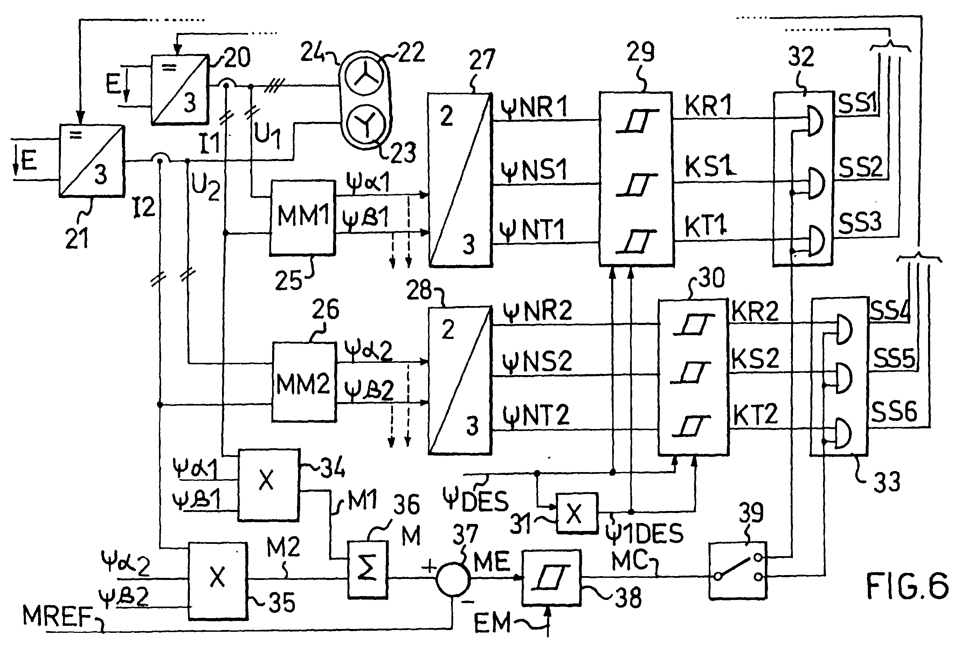

It is merely mentioned herein as a statement preliminary to the following description of Figure 6 which shows a preferred embodiment of the control system according to the present invention, that:

- a knowledge of the voltages applied to the phases of each winding, of the currents absorbed, and of the electrical parameters of the motor (resistance and inductance) enables the direction and amplitude of the field vector generated by each of the two windings, as well as the driving torque developed at the air-gap, to be defined at every moment;
- once the field vector has been defined, it can be described by the Cartesian components of the vector along any two perpendicular axes.

In particular, with reference to Figure 3, if the axes OA, OC, OE correspond to the stationary axes of the three phases of a winding, the generic flux vector $\psi(t)$ is described equally well by the component $\psi A$ along the axis OA and by the component $\psi NA$ perpendicular to the axis OA, by the component $\psi C$ along the axis OC and by the component $\psi NC$ perpendicular to the axis OC, as well as by the component $\psi E$ along the axis OE and by the component $\psi NE$ perpendicular to the axis OE.

The generic description of the flux vector $\psi(t)$ by its components along the axes of the three phases of the other winding (the axes OH, OJ, OL) is exactly the same.

In a direct self-control system as described in the US patent A-4,678,248 mentioned, the switching of the excitation of the various phases is determined by the reaching of a predetermined value $\psi DES$ for the component of the stator flux vector perpendicular to the stationary axis of the phase to be switched.

In particular, still with reference to Figure 3, the supply of the phase R, excited by means of the switch S1, is switched when the component $\psi NA$ perpendicular to OA reaches the value $\psi DES$: the switching times t0 and t3 are thus defined by this condition and not by external timing which is not necessary.

Similarly, the excitation of the phase S by means of the switch S2 is switched when the component $\psi Ne$ perpendicular to OC adopts the value $\psi DES$, and so on.

Having made these preliminary statements, it is possible to consider Figure 6 which is a block diagram showing, as a whole, a drive system for a double-star motor incorporating a preferred embodiment of the control system of the present invention.

The drive system comprises two inverters 20, 21 for supplying a first winding 22 and a second winding 23, respectively, of an asynchronous motor 24.

The inverters of the type shown in Figure 1 are supplied by a direct voltage E.

The voltages and currents supplied by the two inverters, measured by voltage or current transformers (in this connection, see the patent US-A-4,678,248 cited) and identified briefly by the references U1, U2, I1, I2, are applied as inputs to blocks 25, 26 which constitute an electrical model (or even a mathematical model) of the motor relating to the first stator winding (MM1) and to the second stator winding (MM2), respectively.

The two blocks produce respective pairs of output signals $\psi\alpha1$, $\psi\beta1$, $\psi\alpha2$, $\psi\beta2$ which represent the Cartesian components of the flux vectors resulting from the supply of the two windings, along two arbitrary coordinates $\alpha$ and $\beta$.

The signals $\psi\alpha1$, $\psi\beta1$, $\psi\alpha2$, $\psi\beta2$ are supplied as inputs to two signal converters 27 and 28, respectively, which derive from the input signals and produce as outputs respective sets of three signals $\psi NR1$, $\psi NS1$, $\psi NT1$, and $\psi NR2$, $\psi NS2$, $\psi NT2$ which represent the components of the flux vectors along axes perpendicular to those of the spatial orientation of the phases RST (1, 2) of the two windings.

The signals output by the two blocks 27, 28 are applied as inputs to two comparator blocks 29, 30, respectively, which compare them with two externally-set reference signals $\psi DES$ and $\psi1DES$.

These signals define the operative conditions of the motor in terms of the stator flux which is to be developed.

In particular, with reference once more to Figure 4, $\psi DES$ defines the maximum component of the flux vector perpendicular to one of the axes A, C, E (or H, J, L) representative of the static spatial electrical orientation of the phases of the windings, and $\psi1DES$ defines the component of the flux vector perpendicular to the same axes, for which the advanced and delayed switching of the phase excitation should take place.

Clearly, irrespective of the value of $\psi DES$, which may vary with the operative conditions, $\psi1DES$ is unambiguously correlated with $\psi DES$ and is proportional thereto with a proportionality factor which depends solely on the advance/delay angle $\gamma$.

The signal $\psi1DES$ (Figure 6) is thus obtained by a multiplier block 31 with a predetermined multiplication factor.

The comparator blocks 29, 30, the structure of which will be considered in detail below, produce output signals KR1, KS1, KT1, KR2, KS2, KT2 for bringing about excitation of the various phases in dependence on the comparisons performed. These signals are in turn supplied as inputs to two control blocks 32, 33 (basically AND logic gates) which, when enabled, present them as output signals SS1, SS2, SS3, SS4, SS5, SS6 for controlling the inverter switches.

These signals behave as shown in Figure 5.

By modulating the signal $\psi$DES, it is possible to control the operative conditions of the motor by modifying the amplitude of the flux vector developed.

For a faster response, as shown in Figure 6, this form of adjustment may be combined with or replaced by a regulation technique based on the detection and limitation of the instantaneous driving torque developed and its comparison with a desired reference torque.

For this purpose, the signals of the current I1 and of the components $\psi\alpha 1$, $\psi\beta 1$ of the flux vector are supplied as inputs to a multiplier block 34 which multiplies the quadrature current components by the flux components so as to obtain a signal M1 representative of the torque developed by one of the windings.

Similarly, the signals of the current I2 and of the components $\psi\alpha 2$, $\psi\beta 2$ of the flux vector are supplied as inputs to a multiplier block 35 which outputs a signal M2 representative of the torque developed by the other winding.

The two signals M1, M2 are supplied as inputs to an adding block 36 which outputs a signal M representative of the torque developed. This signal M is compared with a reference torque signal MREF in a comparator block 37 in order to generate a torque error signal ME.

The signal ME is in turn applied as an input to a comparator block 38 with hysteresis (possibly with a hysteresis range controllable by means of an external signal ME).

If the torque error signal ME exceeds the upper threshold of the comparator, an output signal MC of the comparator 38 is brought to logic level 0 and returns to logic level 1 when the torque error signal falls below the lower (negative) threshold of the comparator.

The signal MC may be supplied to a control input of the control blocks 32, 33 directly (so that, when it is at logic level 0, it interrupts the supply to all of the phases of the motor) or, preferably, as shown, through an intermediate switch 39 which periodically switches the signal MC, at predetermined (or even controllable) frequency, to the control input of one or other to the blocks 32, 33 (which are normally enabled by means of suitable biasing of the control input).

If the excitation conditions are insufficient to ensure the desired torque value, naturally it is necessary to increase the value of $\psi$DES.

Figure 7 shows in detail a preferred embodiment of the comparators which constitute the blocks 29, 30, the drawing being limited to a single phase, for example, the phase R.

A first comparator 40 with hysteresis receives the signal $\psi$DES at a first input and the signal $\psi$NR1

representative of the component of the flux vector $\psi(t)$ perpendicular to the axis of the phase R1, at a second input.

The value of $\psi$DES defines the amplitude of the hysteresis range of the comparator, that is, its dead region around a zero reference voltage.

If $\psi$NR1, as an absolute value, is lower than $\psi$DES, the comparator 40 thus outputs a signal at logic level 0.

If $\psi$NR1 increases and equals or exceeds $\psi$DES, the comparator switches its output to logic level 1 and keeps it at that level until $\psi$NR1 decreases and adopts a negative value which, as an absolute value, is equal to or greater than $\phi$DES.

In these conditions, the comparator switches its output to logic level 0.

Similarly, a second comparator 41 with hysteresis receives the signal $\psi$1DES at a first input and the signal $\psi$NR1 at a second input.

The behaviour of the comparator 41 is identical to that of the comparator 40 with the sole difference that the hysteresis range or dead region is narrower and is defined by $\psi$1DES.

Finally, a third comparator 42 receives, at a reference input, a reference voltage "0" and, at a signal input, the signal $\psi$NT1 representative of the component of the flux vector $\psi(t)$ perpendicular to the axis of the phase T.

The comparator 42 may also be a comparator with hysteresis with a relatively narrow dead region defined, in this case, by a signal other than "0" applied to the reference input.

The signals output by the two comparators 41, 42 are supplied as inputs to a block 43 with an EXCLUSIVE OR (XOR) function.

The signals output by the comparator 40 and by the XOR 43 are supplied as inputs to a second XOR logic gate 44, at the output of which the signal KR1 for bringing about excitation of the phase R is available.

The operation of the circuit described is very simple and is explained with reference to Figures 4 and 5.

When the flux vector $\psi(t)$ moves along the trace defined by the portion 18 (Figure 4), at moments in time which precede t0, the switch S1 connects the phase R1 to the negative voltage and KS1=0.

Since the switch S3 connects the phase T1 to the positive voltage, the flux vector tends to be oriented in the direction defined by the axis OE corresponding to the axis of the phase T1 and its component $\psi$NR1 increases until it equals $\psi$1DES.

The comparator 41 therefore switches its output to 1.

At the same time, since the component $\psi$NT1 is still negative, the output of the comparator 42 is at logic level 0 so that the output of the XOR 43 is at 1.

Since $\psi$NR1 is less than $\psi$DES, the output of the comparator 40 is at zero: the output of the XOR 44 therefore switches to 1 as does KR1. The phase R is switched to the positive voltage.

The flux vector then follows the trace described by the portion 19.

When the component ψNT1 of the flux vector becomes zero and then increases, that is, when the flux passes beyond the axis OE, the comparator 42 brings its output to level 1 and the output of the XOR 43 is brought to 0 as is the control KR1.

The phase R is thus switched to the negative voltage and the flux vector follows the trace described by the portion 20 and ψNR1 increases again.

When ψNR1 equals ψDES, the comparator 40 switches its output to 1 and the signal KR1 is brought back to 1 and is kept at 1 until ψNR1 decreases and adopts a negative value which is greater, as an absolute value, than ψ1DES.

At this point, the comparator 41 switches its output to 0.

Since ψNT1 is still positive, the output of the XOR 43 rises to 1.

Moreover, since the output of the comparator 40 is still at logic level 1, the output of the XOR 44 and the control KR1 switch to 0.

This switching occurs when the flux vector stops following the trace described by the portion 14.

When ψNT1 then becomes zero, the output of the comparator 41 is brought to 0 and the output of the XOR 43 returns to 0 so that the output of the XOR 44 brings the control KR1 to 1.

The control KR1 is brought back to 0 when ψNR1 adopts a negative value which is greater, as an absolute value, than ψDES, causing the comparator 40 to switch.

Clearly, the other phases are controlled by circuits identical to those described, to which the appropriate flux components are supplied as inputs.

The foregoing description relates purely to a preferred embodiment and, clearly, many variations may be applied.

For example, the motor may have more than two, for example, three, windings offset from one another by 20 electrical degrees.

Moreover, although the offset between the windings is preferably 30 electrical degrees (in the case of a motor with two windings) it may also be shifted from this value for structural reasons.

In this case, the phase switchings may advantageously be performed with different advance and delay angles relative to the stationary directions of the winding axes. This necessitates shifting of the intermediate switching relative to the direction of the winding axes, which can be achieved by replacing the comparator 42 of Figure 7 with a comparator with the same hysteresis as the comparators 40, 41.

It is also clear that the orientation of the field vector may be defined by values representative of the instantaneous angle of the vector relative to predetermined angular directions rather than by its component along predetermined axes.

Finally, the fact that the drive system is formed by analog circuits rather than digital circuits or combinations thereof is wholly unimportant. A suitably microprogrammed microprocessor alone can even perform all of the processing operations necessary to convert the signals and to compare them with externally set reference conditions.

Moreover, although in practice the solution is infrequent, the windings may in general, be multi-phase windings with two, three or more phases.

## Claims

1. A control system for supplying, to an asynchronous motor having a plurality of multiphase windings, voltage pulses which are supplied to each of the phases by a plurality of inverters (20, 21), one for each phase, the system comprising control means (25, 26, 27, 28, 29, 30, 40) for switching the impressed voltage to each of the phases with a period P/2, P being the electrical period of rotation of a rotating field vector generated by the voltage pulses, at moments at which the rotating field vector adopts predetermined angular directions spaced angularly by an electrical angle equal to $\pi$, characterized in that it comprises means (41, 42, 43, 44) for advancing the switching to moments at which the field vector is spaced angularly in advance of the predetermined directions by a first predetermined electrical angle ($\gamma$), for switching the impressed voltage again when the field vector adopts substantially the predetermined angular directions, and for further switching the impressed voltage at moments at which the field vector is angularly delayed relative to the predetermined directions by a second predetermined electrical angle ($\gamma$).

2. A control system according to Claim 1, in which the first and second predetermined angles are equal.

3. A control system according to Claim 2, in which the motor has two sets of three windings offset relative to one another by an electrical angle ($\alpha$) equal to 30 electrical degrees, the first and second predetermined angles being of the order of 5-7.5 electrical degrees.

4. A control system according to Claim 3, in which the control means are direct self-control means based on the identification of the instantaneous orientation of the rotating field vector.

5. A method of supplying an asynchronous motor having n multiphase windings offset relative to one another by a predetermined angle $\alpha$, by means of n inverters comprising switches (S1, S2, S3, S4, S5, S6) controlled by corresponding driving signals (SS1, SS2, SS3, SS4, SS5, SS6) which selectively impress on the phases voltage pulses for generating a rotating magnetic field represented by a rotating field vector,

characterized in that each of the driving signals switches the impressed voltage to an associated phase when the rotating field vector adopts predetermined angular directions spaced substantially by an electrical angle equal to $\pi$, when the rotating field vector adopts a first angular direction in advance of the predetermined angular directions by a first predetermined angle ($\gamma$), and when the rotating field vector adopts a second angular direction, delayed relative to the predetermined field directions by a second predetermined angle ($\gamma$), so that the component of the field vector generated by each of the windings describes a generally polygonal trace with vertices of the polygon bent inwardly.

6. A method according to Claim 5, in which the first and second predetermined angles are equal.

7. A method according to Claim 6, in which the asynchronous motor is a double-star motor with windings offset by 30 electrical degrees and the first and second electrical angles are between 5 and 7.5°.

8. A method according to Claim 7, in which the driving signals are controlled by a DSC (direct self control) technique.

FIG.1

FIG.7

FIG.2

FIG.3

FIG.4

FIG.5

FIG.6